# EUROPEAN PATENT SPECIFICATION

(11) **EP 0 338 798 B1**
(45) Date of publication and mention of the grant of the patent: **13.07.1994**
(21) Application number: 89303871.1
(22) Date of filing: 18.04.1989
(51) Int. Cl.: H02M 7/5387

(54) **Pulse width modulation control unit of inverter**
Pulsbreitenmodulierungssteuereinheit für Wechselrichter
Unité de commande de modulation d'impulsion pour onduleur

(30) Priority: 18.04.1988 JP 95200/88; 25.05.1988 JP 127948/88; 30.05.1988 JP 132459/88; 30.05.1988 JP 132460/88; 30.05.1988 JP 132461/88
(43) Date of publication of application: 25.10.1989
(73) Proprietor: DAIKIN INDUSTRIES, LIMITED, Osaka-shi, Osaka-fu 530 (JP)
(72) Inventor: Ohyama, Kazunobu c/o Shiga Plant, Okamoto-cho Kusatsu-shi Shiga-ken (JP); Yamai, Hiroyuki c/o Shiga Plant, Okamoto-cho Kusatsu-shi Shiga-ken (JP)
(74) Representative: Boydell, John Christopher

(56) References cited:
- EP-A- 0 232 702
- US-A- 4 720 777
- IEEE TRANSACTIONS ON INDUSTRY APPLICATIONS vol. 23, no. 5, 31 October 1987, NEW YORK US pages 887 - 893; Y. MURAI et al.: "New PWM method for fully digitized inverters"

## Description

This invention relates to a pulse width modulation control unit of an inverter, and particularly to an improvement in the precise wave form control by increasing the carrier frequency.

As a high-speed switching device, such element as MOSFET (metal oxide film gate field effect transistor) has been developed in recent years. The pulse width modulation control unit of inverter in which MOSFET is introduced is already known from U.S. Patent No.4,691,269, for example. This control unit is capable of effecting precise wave form control and therefore reduction in electromagnetic noise and improvement in motor efficiency can be expected from it.

In the above U.S.patent, as disclosed in its specification from line 48, column 3 to line 62, column 4, control on the pulse width modulation by high carrier frequency is made possible by providing an exclusive hardware composed by analogue control circuits. Control on pulse width modulation by high carrier frequency (20KHz, for example) is also possible by the use of a high-speed arithmetic operator, such as an exclusive hardware composed by digital circuits, DSP (digital signal processor), or the like.

Also, control ont he pulse width modulation of inverter by using a microcomputer is known from U.S. Patent No.4,622,628.

However, use of a high-speed arithmetic operator, such as an exclusive hardward composed by analogue control circuits or digital circuits involves such drawbacks as intricacy of circuits, complexity of various regulations, higher costs, etc.

It is therefore conceivable to adopt the one-chip microcomputer which is cheap in cost and simple in composition of circuits. This idea, however, as stated in "Power electronics and AC drivers" (written by B.K. Bose, published by Prentice-Hall Inc.), involves a long operating time of a microcomputer (about 200uS) for a series of processes required for generation of PWM control patterns and this operating time corresponds to a carrier frequency of about 5KHz at the maximum. Therefore, pulse width modulation control by carrier frequency of high-frequency (more than 20KHz) is difficult.

Reference is also made to EP-232702 which describes a method and apparatus for controlling a power convertor, using control signals created using a one-chip microcomputer. Control is by width modulation of sinusoidal pulses and the problem arises of generating sufficiently narrow pulses using a one-chip microcomputer in the event that the pulse width becomes shorter than the necessary interruption processing time of the microcomputer.

The present invention seeks to make it possible to carry out pulse width modulation control at a high carrier frequency with a cheap and simple circuit composition, while adopting a one-chip microcomputer, by effectively raising the carrier frequency, and to obtain such effects as reduction in electromagnetic noise, improvement in motor efficiency, etc., by precise wave form control.

According to the invention, there is provided a pulse-width modulation control unit for an inverter having a bridge circuit connected to a three-phase winding, said bridge circuit having a plurality of switching elements, whereby a D.C. voltage is pulse-width modulated by an ON/OFF operation of each switching element of said bridge circuit and a three-phase A.C. voltage is applied to said three-phase winding, said control unit being characterised in that it comprises:
an arithmetic operation means for calculating an ON time of each switching element at a calculation period corresponding to a carrier frequency;
a dividing means for dividing the ON time of each switching element calculated by said arithmetic operation means into a plural number of pulses; and
a controlling means for controlling the ON time of each switching element by said pulses obtained by dividing the ON time into a plural number of pulses.

In the present invention the algorithm which generates the PWM control patterns (namely, the ON time of the plural switching elements provided in the inverter) is changed and each ON time is divided into plural pulses, even if the calculating time (calculating cycle) of PWM control pattern is long, so as to effectively raise the carrier frequency.

The particular means which the present invention has adopted is based on pulse width modulation of an inverter provided with a bridge circuit which is connected to a three-phase winding and has plural elements (Tra)-(Trc'), whereby, d.c. voltage is pulse-width modulated by ON/OFF motion of each switching element (Tra)-(Trc') of the bridge circuit and three-phase AC voltage is applied to the three-phase winding, as shown in Figures 1 and 2. As shown in Fig.6 and Fig.7, the device according to the present invention has the construction comprising an arithmetic operating means which calculates ON time of each switching element (Tra)-(Trc') by the operating cycle corresponding to carrier frequency, a dividing means which divides ON time of each switching element (Tra)-(Trc') calculated by said arithmetic operating means into plural pulses and a controlling means which ON controls each switching element (Tra)-(Trc') with plural pulses obtained by dividing ON time into the plural number by the dividing means.

Under the above construction of the present invention, even if the carrier frequency is normal value (about 5KHz, for example), ON time (PWM control pattern) of each switching element (Tra)-(Trc') is calculated repeatedly by the arithmetic operating means at every operating cycle (about 200uS) corresponding to the above carrier frequency. As the ON time of each switching element (Tra)-(Trc') is divided into plural pulses (four pulses, for example) by the dividing means, the carrier frequency is increased by such number of divisions and this presents such conditions that the pulse width modulation control was carried out at correspondingly high carrier frequency. As a result, if each switching element (Tra)-(Trc') is ON controlled by the controlling means with each divided pulse, precise output wave form close to sine wave is obtained, with the result that electromagnetic noise is reduced effectively and motor efficiency is raised effectively.

In the above case, carrier frequency for pulse width modulation control is a normal value (about 5KHz) and PWM control pattern can be calculated well even by a one-chip microcomputer which involves a long calculating time. Therefore, pulse width modulation control by high carrier frequency can be carried out at cheap cost and with a simple circuit construction.

The above object and novel features of the present invention will be understood more clearly by reading the following detailed description, with reference to the accompanying drawings.

The accompanying drawings show preferred embodiments of the present invention.

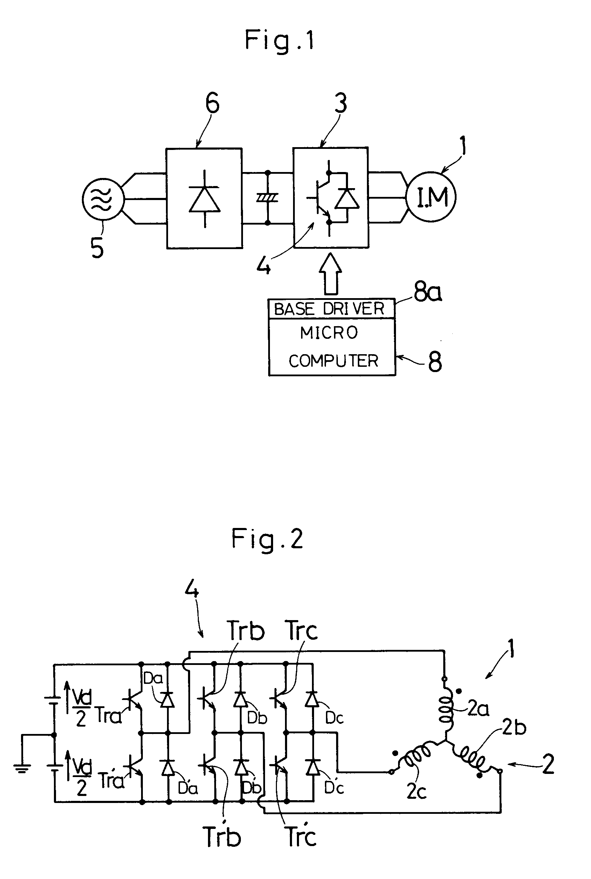

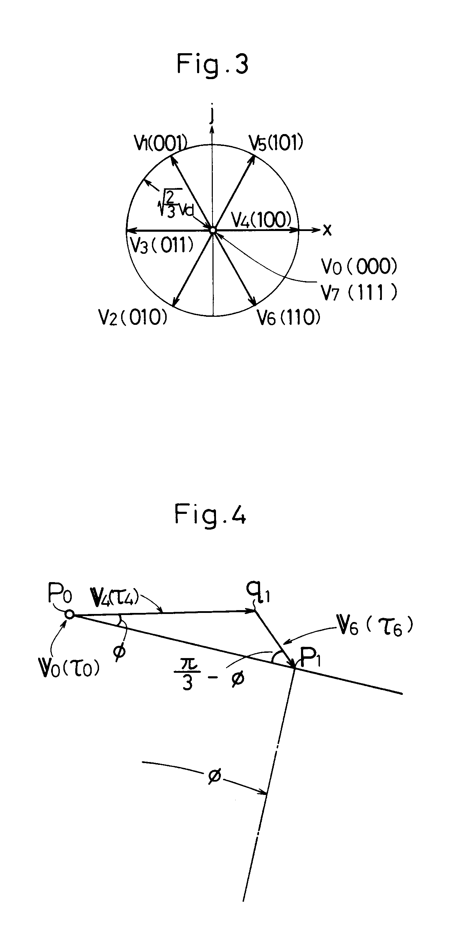

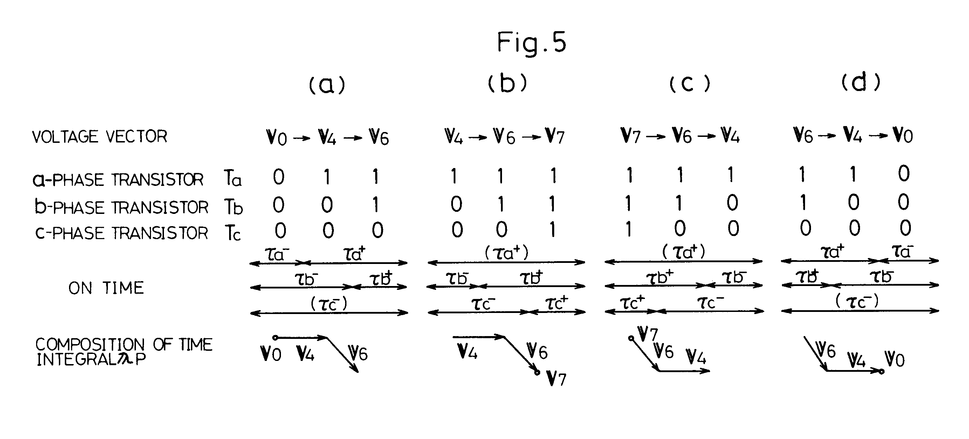

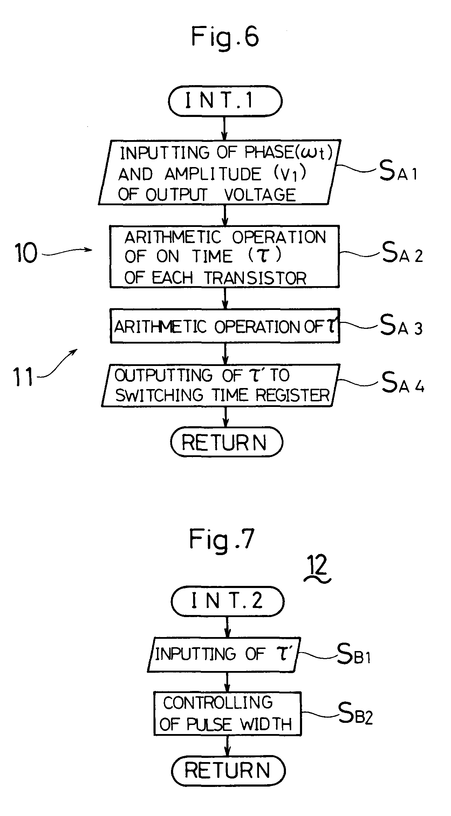

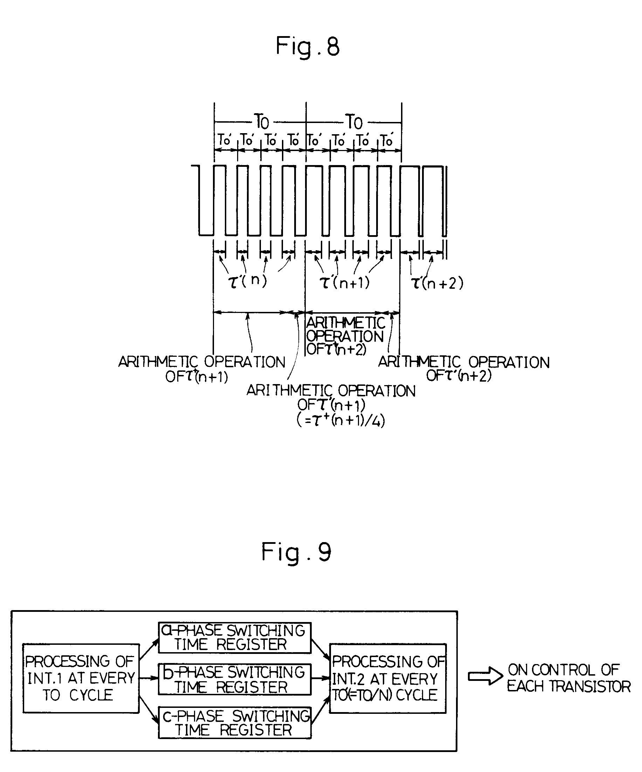

Fig.1 through to Fig.9 show an embodiment of the present invention, of which Fig.1 is a rough composition drawing of the whole; Fig.2 is an electric circuit diagram of a voltage type inverter; Fig 3 is an explanatory drawing, showning the state of a voltage type inverter by eight kinds of voltage vector; Fig.4 is an explanatory drawing of voltage vector control for making a locus of the time integral of voltage vector on a complex plane resemble a circuit locus; Fig.5 (a)-(d) are respectively an explanatory drawing of kinds of PWM control pattern which are obtainable within the range of 0≦φ≦π/3 of angle 4); Fig.6 and Fig.7 are respectively a flow chart showning ON/OFF control of each transistor by a one-chip microcomputer; Fig. 8 is an explanatory drawing, showing that carrier frequency has risen correspondingly; and Fig. 9 is an explanatory drawing of operation.

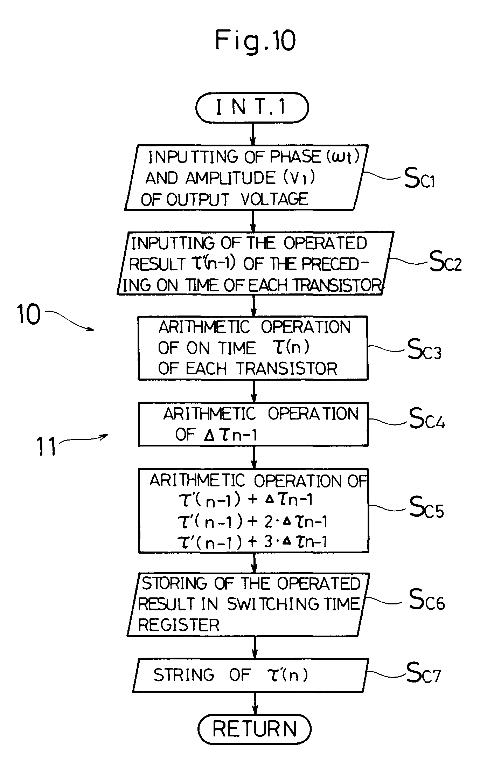

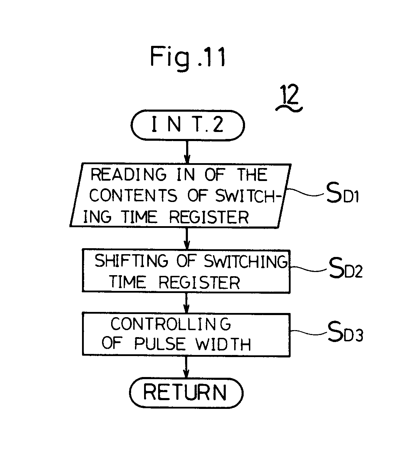

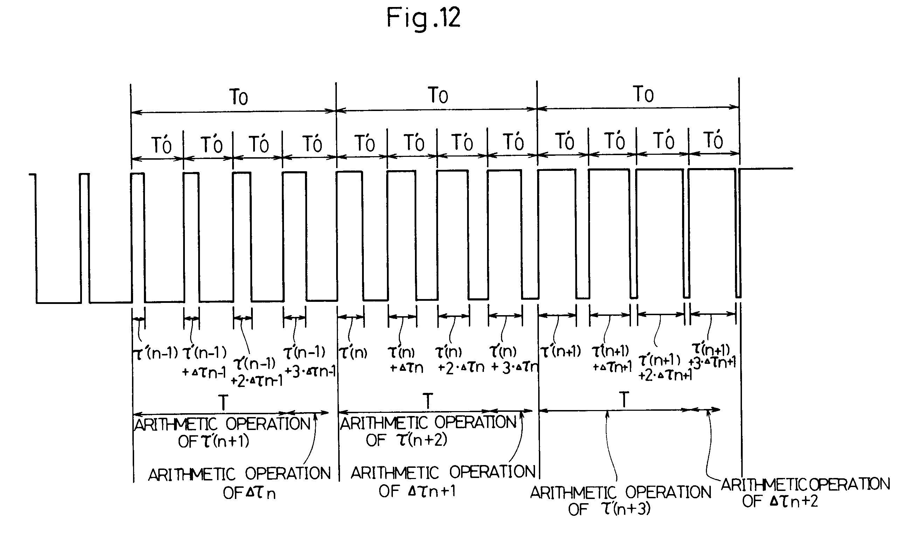

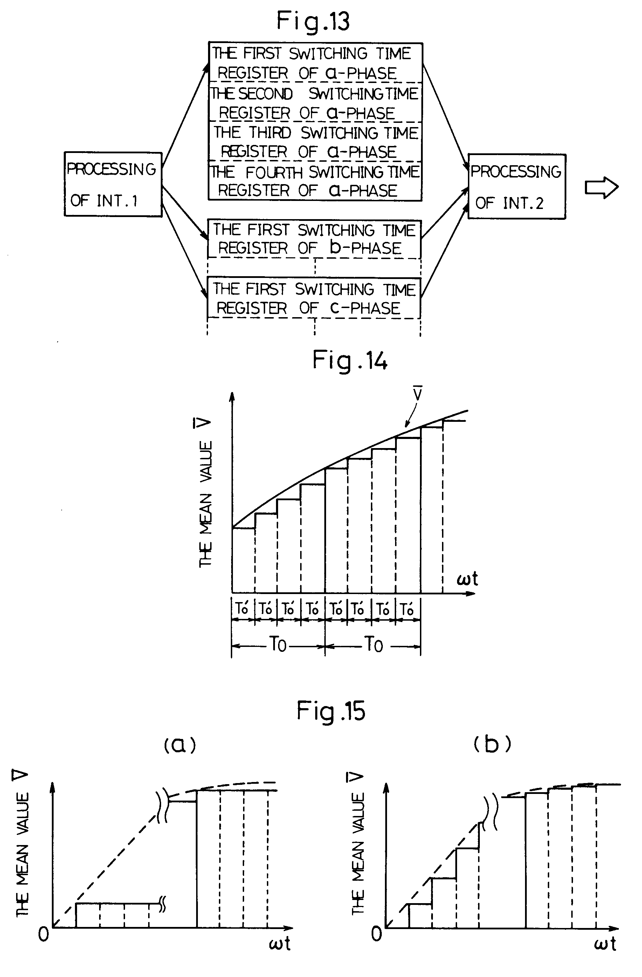

Fig. 10 through to Fig. 15 show respectively the first modified example, in which Fig. 10 and Fig.11 are respectively a flow chart in the case where a transitor is ON/OFF controlled with the pulse of unequal width; Fig.12 is an explanatory drawing, showing the state of interpolation of each divided pulse in the case where ON time is divided into pulses of unequal width; Fig. 13 is an explanatory drawing of the operation in the case where On time is divided into pulses of unequal width; Fig.14 is an explanatory drawing, showning the state of reproduction of wave form in the case of division into pulses of unequal width; Fig. 15(a)-(b) are explanatory drawings, each showning reproduction of wave form int he case where ON time is divided into pulses of equal width and into pulses of unequal width.

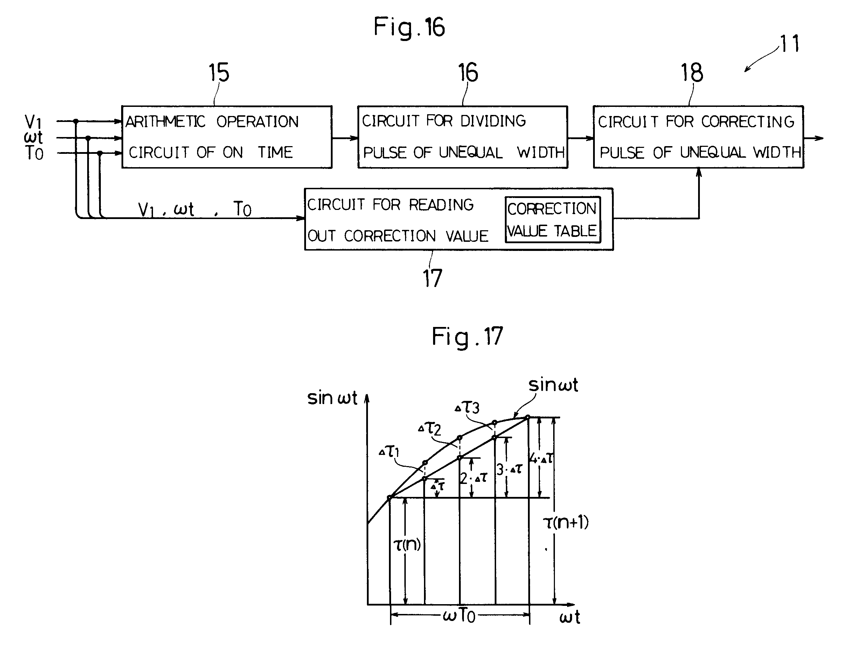

Fig.16 and Fig.17 shown respectively the second modified example, in which Fig.16 is a block composition diagram of a microcomputer and Fig.17 is an explanatory drawing, showning the state of interpolating the divided pulses.

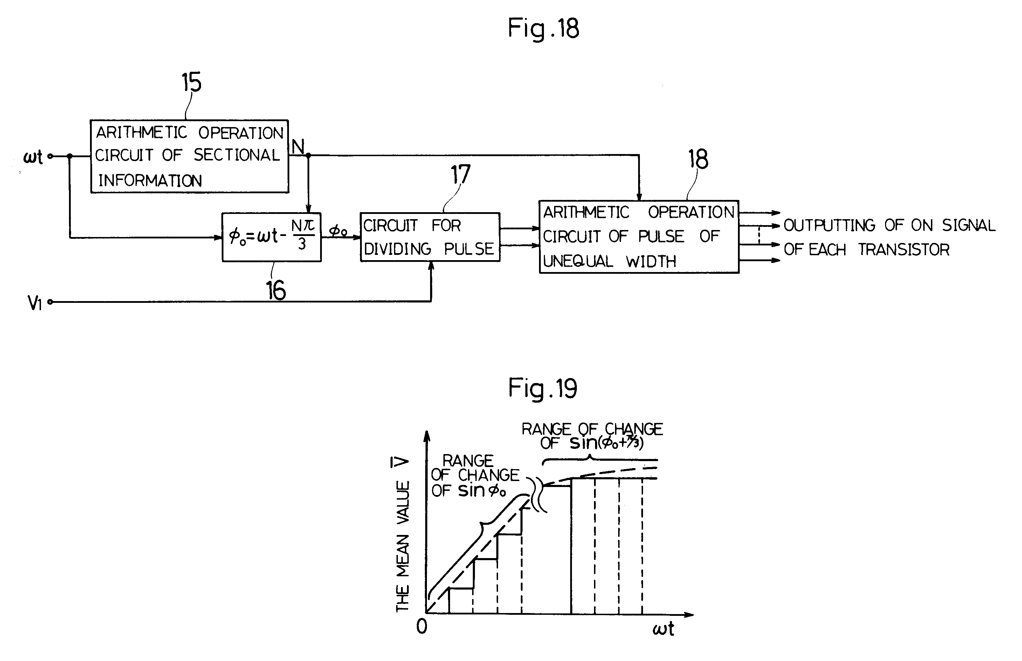

Fig.18 and Fig.19 show respectively the third modified example, in which Fig.18 is a block composition diagram of a microcomputer in the case where ON time of transistor is divided into pulses of equal width or pulses of unequal width according to the rate of change of angle of signal wave which becomes a criterion in the case where choise is given between the division into pulses of equal width and the division into pulses of unequal width.

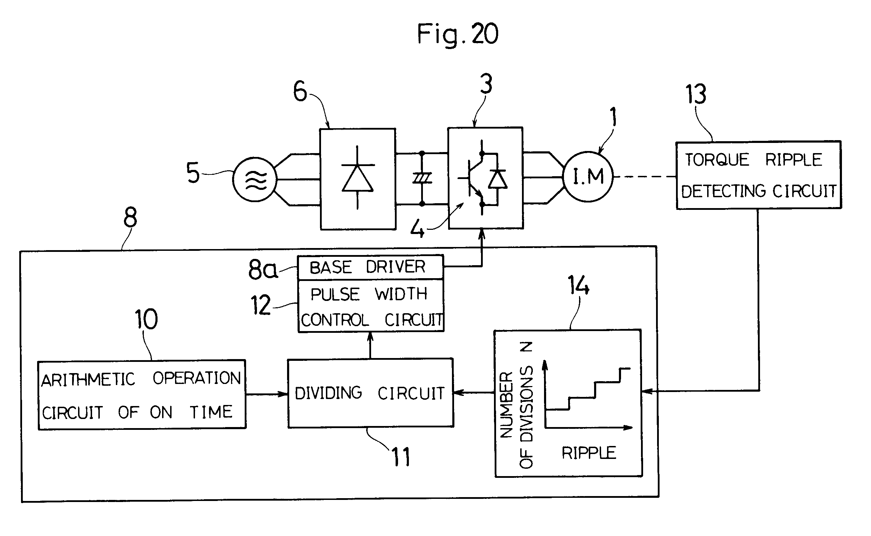

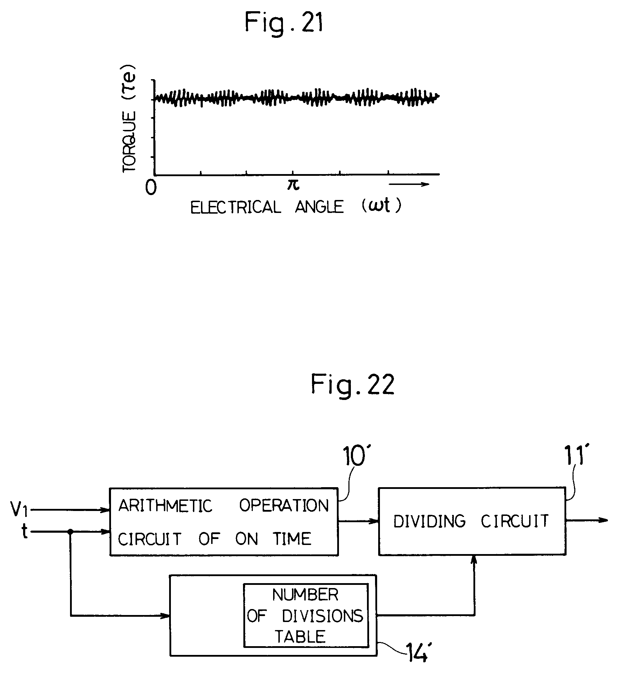

Fig.20 and Fig.21 show respectively the fourth modified example, in which Fig.20 is a composition drawing of the whole and Fig.21 is a drawing, showing a wave form of torque generated by an electric motor.

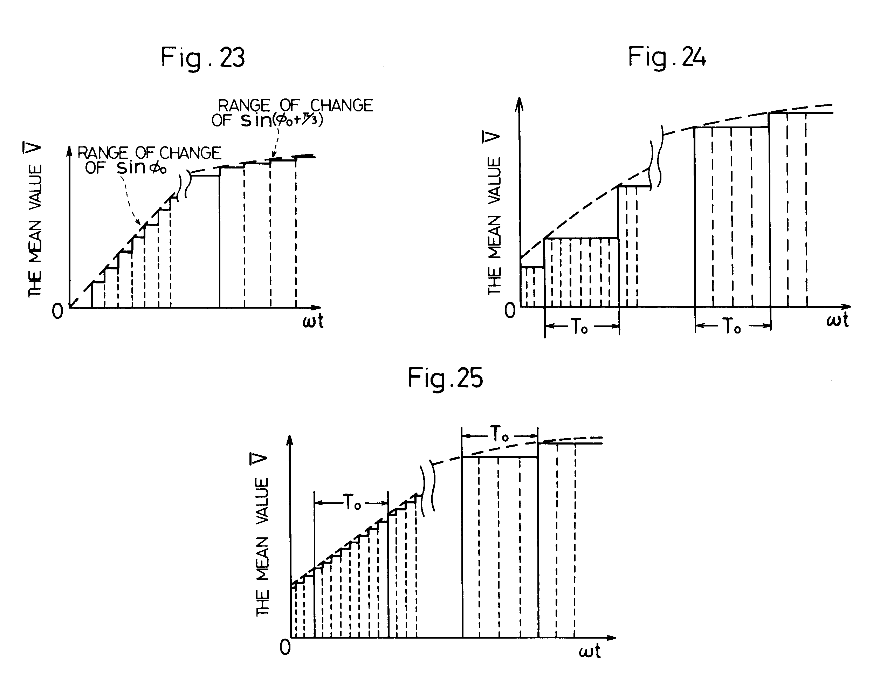

Fig.22 through to Fig.24 show respectively the fifth modified example, in which Fig.22 is a block diagram of a microcomputer in the case where the number of divisions of ON time is set variably according to the rate of change of ON time of a transistor; Fig.23 and Fig.24 are explanatory drawings, showing the state of reproduction of wave form.

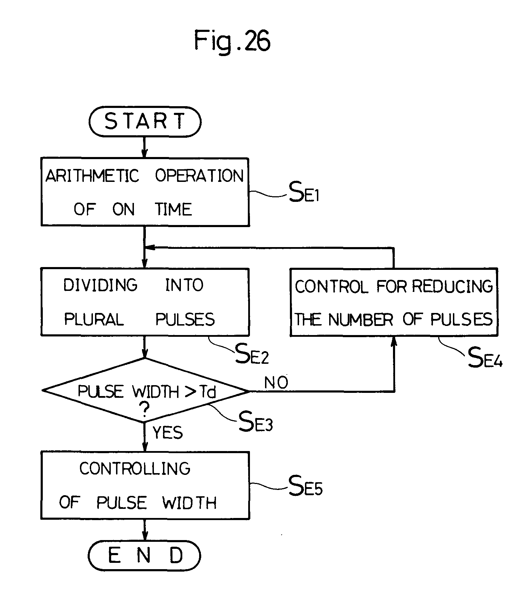

Fig.25 and Fig.26 show respectively the sixth modified example, in which Fig.25 is an explanatory drawing of the state of reproduction of wave form and Fig.26 is a flow chart, showning the pulse width control for preventing the short-circuit of arms located at the upper and lower parts of the inverter.

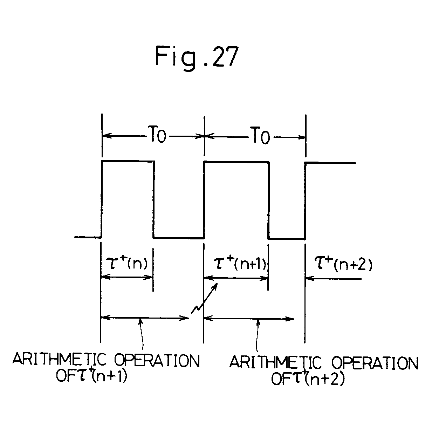

Fig.27 is an explanatory drawing, showing a conventional example.

Each of preferred embodiments of the present invention is explained below, with reference to accompanying drawings.

Fig.1 and Fig.2 shown a pulse width modulation (hereinafter abbreviated as PWM) control unit. In these figures, reference numeral 1 designates an induction motor having three-phase widing 2 with three windings 2a, 2b, 2c Y-connected. Reference numeral 3 designates a voltage type inverter connected to the induction motor 1. The inverter 3 is provided with a transistor bridge circuit 4 connected to the three-phase winding 2 of the induction motor 1. The bridge circuit 4 has plural (six) transistors, such as MOSFET, (switching elements) (Tra), (Tra'), (Trb), (Trb'), (Trc), (Trc'), each having a reflux diode (Da)-(Dc'). DC voltage is applied to the inverter 3 from a rectifier 6 which rectifies three-phase AC of three-phase power source 5.

Reference numeral 8 designates a one-chip microcomputer which forms ON time (namely, PWM control pattern) of six transistors (Tra)-(Trc') of the bridge circuit 4. The microcomputer 8 is provided with a base driver 8a which ON/OFF operates the transistors (Tra)-(Trc'). By ON/OFF Controlling the transistors (Tra)-(Trc') by the microcomputer 8, DC is pulse-width modulated.

An explanation is made below of the formation of PWM pattern by the microcomputer 8.

In brief, formation of PWM control pattern is made by determining the PWM control pattern so as to make a locus of time integral of output voltage resemble a circular locus. To be more precise, suppose va, vb, vc are voltage of output terminal of the inverter 3 and vn is voltage of neutral point of the three-phase winding 2 and also output voltage vector Vp and time integral λp of the voltage vectorvp which are defined by the following formulae are taken into consideration. 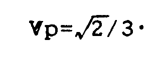 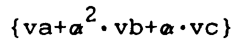 where

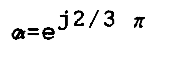

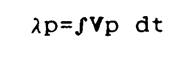

Voltage vector Vp and time integral λp of the voltage vector, when balanced three-phase voltage of angular frequency ω is added to the three-phase winding 2 of the inductor motor 1, generate a circular locus on a complex plane. 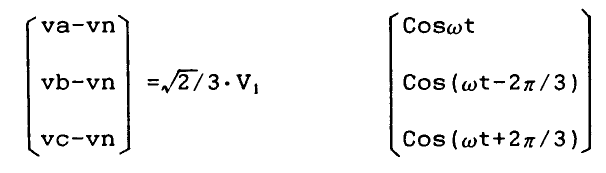 (V₁=Effective voltage of fundamental wave)

On the other hand, in the voltage type inverter 3, as either of the two transistors in each phase is always in ON state, if for convenience' sake ON state of the transistor on (+) side is expressed by "1" and On state of the transistor on (-) side is expressed by "0" and "101", "011"....... are inscribed in the order of a-phase, b-phase and c-phase, the state of the inverter 3 is available in eight kinds. Voltage vector Vp (P = 0-7) of each state is √/2/3Vd (Vd = DC voltage of the rectifier 6) in magnitude and its direction is as shown in Fig.3. Vo and V₇ are zero vector. since the time integral of the above voltage vector λp is 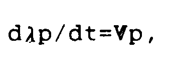 the time integral of the inverter 3 (while it is being driven) λp moves at the speed of 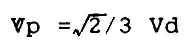 in the direction of voltage vector Vp. (However, it is kept standing in the case of zero vector).

From the above, PWM control pattern of the voltage type inverter 3 is determined by selecting a voltage vector VP properly so that a vector locus on a complex plane of the time integral λP of voltage vector moves at an angular velocity ω along the circumference of a circle of the designated radius R (the disignated radius R=V₁/ω, where V₁ is an effective value of linear voltage of the voltage of fundamental wave, ω is angular frequency).

More particularly, such a case is taken into consideration that as shown in Fig.4, for example, when the angle φ is within the range of 0≦φ≦π/3 and V₄, V₆ and zero vector (Vo, for example) are used, voltage vector halts at the point Pₒ for the time τ0 (this state is shown by the symbol ⁰), then V₄ reaches the point q₁ in the time τ6. In this case, in △P0 q₁ P₁ 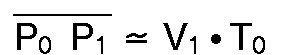 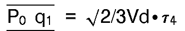 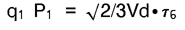 and 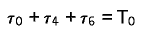 Therefore, by solving the above formulae, the time τ4, τ6, τ0 taken by voltage vector V₄, V₆, and Vo within the period To are obtained. 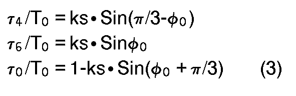 where, ks is voltage control rate or

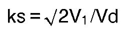

The above (3) formulae are relative formulae when the angle φ is within the range of 0≦φ≦π/3 but in the other ranges of angle, since the inverter 3 performs the motion of symmetrical three-phase, relative formulae within the angle range of 0≦φ≦tπ are obtained by permutating each symbol as shown in the following Table 1.

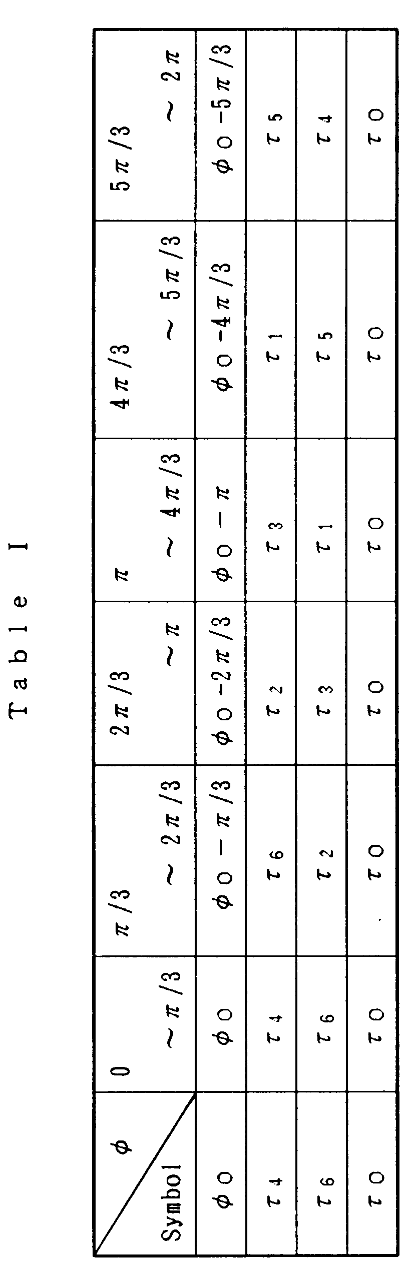

On the basis of the time ₇ of voltage vector in the above (3) formulae, On/OFF pattern (PWM control pattern) of each transistor (Tra)-(Trc') is obtained. In this case, since the relation between the time τ of voltage vector and PWM control pattern changes in accordance with the order in which voltage vector is taken, if for simplicity's sake such restrictive conditions that the same pattern is repeated in each period To and switching of ON/OFF of a transistor in each period To is limited to once are set, PWM control patterns are represented by four patterns shown by Figs.5(a)-(d) (in the figure, ₇ ⁺ and τ ⁻ show respectively ON time of the transistor on (+) side and ON time of the transistor on (-) side.

Of the above four PWM control patterns, it is preferable to adopt the pattern of Fig.5(a) or Fig.5(b), showing a slightly larger amplitude of output voltage of fundamental wave.

In the voltage type inverter 3, since the PWM control pattern is determined necessarily if only the mane of a transistor which performs first the ON motion in the period To and the time when the transistor turns to OFF motion, the PWM control pattern can be determined by the following formulae, with reference to the above (3) formulae and Fig.5(a)-(d), provided that the angle q) is within the range of 0≦φ≦π/3.
(Formulae a) 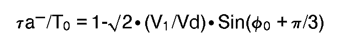 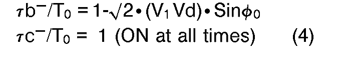
(Formulae b)

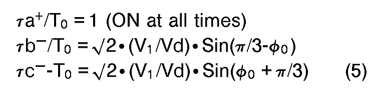

The relative formulae (4) of the PWM control pattern within the above range of 0≦φ≦π/3 can be relative formulae if each symbol is permutated as shown in the following Table II in the same way as stated before. If ON time of each switching element is calculated on the basis of calculation formulae of the above (4) or (5) relative formulae, not only calculating time can be reduced comparatively but also either of two transistors can always be ON controlled and PWM control patterns can be calculated only by two sets of times (saving of one set of timers). How to use properly the above (4) and (5) relative formulae is indicated below.

In the case where it is necessary, from the restriction on hardware, to arrange zero vector at the first of the period To, the (4) formulae are used and in the case where it is necessary to arrange zero vector at the last of the period To, (5) formulae are used. In this embodiment, PWM pattern in Fig.5(a) is adopted and the (4) formulae are used.

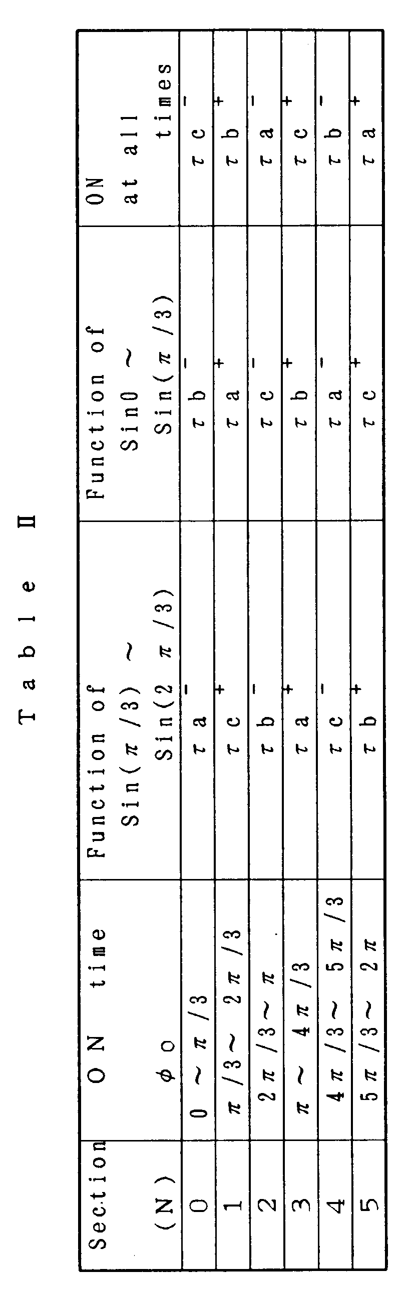

The permutation table in the above Table II is stored beforehand in the microcomputer 8.

The motion of the one-chip microcomputer 8 is explained below, on the basis of flow charts of Fig.6 and Fig.7 and with reference to Fig.8.

The flow chart of Fig.6 is for calculating ON time (PWM control pattern) of each transistor (Tra)-(Trc') and the flow chart of Fig.7 is for controlling actually each transistor (Tra)-(Trc').

Referring first to the flow chart of Fig.6, the program by this flow chart is carried out repeatedly for every operation period To (200µS, for example) corresponding to carrier frequency (5KHz, for example). First, phase wt(= φ0) of output voltage and amplitude V₁ of output voltage are inputted at the step S_{A1}. Then ON time τ(n + 1) of each transistor (Tra)-(Trc') is calculated on the basis of the relative formulae (4) of PWM control pattern and the permutation table of Table II at the step S_{A2} . At the step S_{A3}, ON time τ(n + 1) of each transistor (Tra)-(Trc') thus calculated is divided by the preset numerical value N (4, for example) into plural N (4) pulses τ '(n + 1 )(τ'(n + 1) = τ(n + 1 )/4). Then, at the step S_{A4}, the divided pulse 7 '(n + 1) is stored in a switching time register for each phase (in the voltage type inerter, since either of two transistors is always in ON state in the arms of each phase, one registor is enough for each phase), and "RETURN".

In the case of the flow chart of Fig.7, its repetition period To' is quicker than the calculation period To of Fig.6 and is set at To' = To/N in accordance with the number of divisions N (4) of the ON time τ(n+1) (it is preferable that the number of divisions N is determined to be N = 2^{m} m = 1, 2...), by which divisions can be practiced only by shifting. After the divided pulse τ '(n + 1) was stored in a switching time register for each phase in the flow chart of Fig.6, during the next calculation period To the contents of the switching time register are inputted at the step S_{B1} as shown in Fig.8 and transistors (Tra)-(Trc') which should be ON controlled by the divided pulse τ '(n + 1) are ON controlled by the divided pulse τ '(n + 1) at the step SB₂, and "RETURN".

In the flow chart of Fig.6, there is provided an arithmetic operation means 10 by which at the step S_{A1} and the step S_{A2} On time τ(n+1) of each transistor (switching element) (Tra)-(Trc') is calculated at the calculation period according to the carrier frequency (5KHz) and on the basis of the above relative formulae (4) of the PWM control pattern and transistors (Tra)-(Trc') which should take the calculated ON time τ(n+1) are specified on the basis of the permutation table of Table II. There is also provided a dividing means 11 by which at the step S_{A3} the ON time τ(n+1) of each transistor (Tra)-(Trc') calculated by the above arithmetic operation means 10 is divided into plural N (N = 4) pluses τ '(n+1 There is further provided a controlling means 12 by which each transistor (Tra)-(Trc') is ON controlled by plural N(N = 4) pulses τ '-(n + 1) obtained by dividing ON time into the plural number by the dividing means 11.

Therefore, in the above embodiment, as shown in Fig.8 and Fig.9, ON time τ(n+1) of each transistor (Tra)-(Trc') is calculated by the program of the flow chart for calculating PWM control patterns (Fig.6) and on the basis of the relative formulae (4) of PWM control pattern and transistors (Tra)-(Trc') which should be ON controlled by the ON time are specified by the arithmetic operation means 10 and on the basis of the permutation table of Table II. Therefore, each ON time τ(n+1) is divided into a plurality N(4) of pulses τ '-(n + 1) (τ'(n + 1) = τ(n + 1 )/4) and such divided pulses 7 '(n + 1) are stored in the switching time register of each phase a, b, c.

In the next calculating period To, as shown in Fig.8 calculation of ON time τ(n+2) of each transistor (Tra)-(Trc') and division of the ON time τ(n+2) are carried out again in this period To. In this period To, at every Tₒ/N(=Tₒ') period the specified each transistor (Tra)-(Trc') is ON controlled by the controlling means 12 with the divided pulse τ '(n+1) in the switching time register of each phase a, b, c obtained in the preceding period To and therefore, as compared with the conventional one (ON time is not divided into plural pulses) as shown in Fig.27, this process can raise frequency of high-frequency element and can increase equivalently carrier frequency by the number of divisions N (N=4) of ON time, namely, can change the original carrier frequency (5HKz) to a high carrier frequency (20KHz). Fig.8 and Fig.27 shown respectively the case where ON time of a transistor on (+) side of each phase.

Since the original carrier frequancy (5KHz), namely, calculation period To (200µS) of ON time is a period during which PWM control patterns can well be calculated even by a one-chip microcomputer 8, it is possible to carry out PWM control by high carrier frequency (about 20KHz) by using a one-chip microcomputer 8. Accordingly, it is made possible to reduce the cost of a device, to simplify the circuit construction and to carry out a precise wave-form control on three-phase AC wave-form to the induction motor 1 by making the most of high-speed switching element, such as MOSFET, with the result of reduction in electromagnetic noise and improvement in motor efficiency.

In the case of using the conventional carrier frequency (5KHz) arithmetic operating time of one-chip microcomputer 8 can be reduced and the processing ability other than PWM control can be increased.

In the dividing means 11, since ON time T(n + 1) is divided into plural N (4) pulses τ '(n+1) (τ'( +1) =τ(n+1)/4), calculation time can be reduced to a short time because only division is required and the calculation period To of the flow chart of Fig.6, namely, carrier frequency of PWM control can be raised more.

Since calculation of ON time τ(n+1) of each transistor (Tra)-(Trc') is carried out on the basis of the above calculation formulae (4), with less times of addition and subtraction, its calculating time can be reduced and one transistor can be ON controlled at all times. Besides, only two sets of timers corresponding to the other two phases are required and accordingly the circuit construction can be simplified the more. Furthermore, the transistor which should take ON time calculated on the basis of the calculation formulae (4) is specified on the basis of the permutation table of Table II stored beforehand and the calculation of ON Time can be carried out evenly throughout the whole range (0≦φ≦π) of phase φ. Therefore, calculation time ON time τ of each transistor (Tra)-(Trc') can be reduced still further and pulse-width modulation by higher carrier frequency can be carried out.

In the above embodiment, ON time of each transistor (Tra)-(Trc') is calculated on the basis of the relative formulae (4) of PWM control pattern and then this ON time is divided into the plural number N but it is possible to change the relative formulae (4) to the formulae divided by a set numerical value N (N = 4) and to calculate the divided pulse τ '(n+1) directly.

Instead of the calculation of ON time τ(n+1) of each transistor (Tra)-(Trc') at the step S_{A2} in the flow chart of Fig.6, it is possible to provided a ON time table which stores beforehand the calculated result within the range of 0~π/3 of phase φ0. This will make calculation of ON time τ(n+1) of each transistor (Tra)-(Trc') more easy and can reduce memory content.

That part of the contents of a switching time register of each phase which is converted to pulse-width can be processed by hardware, such as IC for pulse-width modulation connected from the outside. Under the composition shown by Fig.9, even if carrier frequency changes due to the change of switching element, change of the dividing means 11 and the controlling means 12 will suffice. The common use of the switching time register and a register of pulse-width controlling part (step S_{B2}) will dispense with the process of the step S_{B1} in Fig.7.

The calculation period To of the calculation flow of PWM control pattern is determined necessarily by the time required for calculating PWM control pattern actually, but the period To' of ON control of transistors in the flow chart of Fig.7 is determined according to the desired carrier frequency, for which the value of the number of divisions N(Tₒ/Tₒ') of ON time of each transistor should be set properly.

An explanation is made below about the first modified example of the above embodiment. This modified example is to divide ON time of each transistor (Tra)-(Trc') into plural pulses of unequal width. The explanation is made, with reference to Fig.10 through to Fig.15.

The division into pulses of unequal width is carried out by linear-interpolating between ON time τ(n) of transistor in the period To and ON time τ(n+1) in the succeeding period To.

In the flow chart of Fig.10, at the step Sc₁ phase ωt and amplitude V₁ of output voltage are inputted and at the step S_{c2} calculated result of ON time τ '(n-1) (pulse divided into four) of each transistor (Tra)-(Trc') is inputted.

Therefore, at the step S_{C3} ON Time τ(n) of each transistor (Tra)-(Trc') of this time is calculated on the basis of the relative formulae (4) of PWM control pattern and this ON time is divided into the plural number N(4) to obtain divided pulses τ '(n) and then, at the step S_{C4}, according to the difference between the last time and this time, the interpolation value A τn+1 of the divided pulse τ '(n-1) of the last time is calculated on the basis of the following formula.

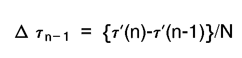

N; number of divisions N=4 4

At the step S_{C5}, so as to interpolate in order four divided pulses _{T} '(n-1) of the last time with this interpolation value A _{Tn}-₁, each divided pulse _{T} '(n-1) (from the second one) is added with A _{Tn-1}, 2·△_{τn-1}, 3·△_{τn-1} in order and at the steps S_{c6} and S_{C7}, this each divided pulse is stored in the plural N(N=4) switching time registers of each phase, and "RETURN".

The flow chart of Fig.11 is for ON controlling each transistor (Tra)-(Trc') with the divided pulse τ' for the duration from period To to the third period To in which divided pulse τ ' was calculated and stored as shown in Fig.12. The period To' of the control is 1/N (N=number of divisions) of the period To for calculation of the flow chart of Fig.10.

In the flow chart of Fig.11, at the step S_{D1} divided pulse τ ' of each phase stored in the first switching time register as shown in Fig.13 is read in, at the step S_{D2} switching time register is shifted and at the step S_{D3} each transistor (Tra)-(Trc') is ON controlled with the divided pulse τ'(n-1) read in, and "RETURN".

Similarly, at every control period Tₒ' divided pulse of each phase stored in the second, the third and the fourth switching time registers in order is read in for ON controlling each transistor (Tra)-(Trc').

Thus, there is provided the dividing means 11 by which ON time _{T} of each transistor (Tra)-(Trc') calculated by the arithmetic operation means 10 is divided into plural N(N=4) pulses of unequal width {τ', (τ'+△τ), (τ'+2·△τ), (τ'+3·△τ)}.

Therefore, in this modified example the division of ON time by the dividing means 11 is carried out for pulse of unequal width as shown by Fig.12 and if the divided pulse τ ' is outputted at the first period T'o, at the next period T'o the divided pulse which is larger than the above divided pulse by the interpolated value A _{T} is outputted and this is repeated at every period T'ₒ of control. Therefore, as compared with the case where division of ON time is carried out for pulse of equal width (the case shown by Fig.15(a)), as shown in Fig.14 and Fig.15(b) wave form can be repreduced precisely to the mean value v of output voltage at the control period T'o corresponding to the equivalent carrier frequency. Also, in the case where ON Time is divided into pulses of unequal width by linear interpolation, precessing time of the microcomputer 8 required for division is comparatively short and equivalent carrier frequency can be raised fully.

Fig.16 and Fig.17 show the second modified example which carries out the division into pulses of unequal width on the basis of the correction value table stored beforehand.

In the case where linear interpolation is carried out as in the case of the first modified example, as shown in Fig.17 each of three pulses of unequal width which lies intermediate has an error A τ₁ , △ τ₂, △ τ₃ respectively in relation to the real value of signal wave (sinωt). Since each error A τi is determined necessarily if only the shape of a since wave function (determined by amplitude V₁ and phase ωt) and the period To of calculating ON time are determined, a correction value table which stores beforehand the error A τi according to amplitude Vi, phase ωt and calculating period To of ON time is prepared and this correction value table is stored in the microcomputer 8.

Fig.16 is a block composition diagram of the microcomputer 8 in the case where division into pulses of unequal width is carried out on the basis of the correction value table. In this figure, reference numeral 15 designates an ON time operation circuit which inputs amplitude V₁ and phase ωt of output voltage and calculation period To of ON time and calculation ON time of each transistor (Tra)-(Trc') on the basis of the flow chart of Fig.6. Reference numeral 16 designates a pulse of unequal width dividing circuit which divides ON time of each transistor (Tra)-(Trc') calculated by the ON time operation circuit 15 into plural N(N = 4) pulses of equal width and then obtains plural N(N = 4) pulses of unequal width from the pulses of equal width on the basis of the correction value calculated by the linear interpolation by the flow chart of Fig.10. Reference numeral 17 designates a correction value reading out circuit which inputs amplitude V₁ and phase ωt of the output voltage and the calculation period To of ON time and reads out correction values Δτi corresponding to them from the correction value table. Reference numeral 18 designates a pulse of unequal width correction circuit which receives output of the pulse of unequal width dividing circuit 16 and the correction value reading out circuit 17 and adds the corresponding correction value Δτi to each of the plural N(N = 4) pulses of unequal width. Each transistor (Tra)-(Trc') is ON controlled by the pulse of unequal width corrected by the pulse of unequal width correcting circuit 18.

Thus, there is provided the dividing circuit 11 by which ON time of each transistor (Tra)-(Trc') is corrected on the basis of the correction value table and is divided into plural N(N=4) pulses of unequal width according to the block composition of the microcomputer 8 of Fig.16.

In this modified example, as shown in Fig.17 after linear interpolation, each of three (N-1) intermediate pulses of unequal width can be reproduced precisely in wave form by the corresponding correction value A τi.

The correction value table can store correction coefficient in lieu of the correction data. In this case, correction is made by multiplying the quantity of change A τ of pulse of unequal width by a correction coeffiecient, as indicated by the following formulae.

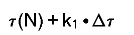

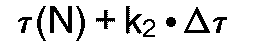

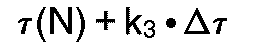

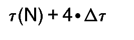

where, ki, k₂, and k₃ are expressed by the following formulae

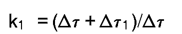

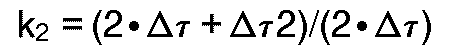

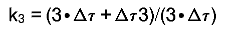

Therefore, in the case of storing the correction coefficient, information of amplitude V₁ is unnecessary and the table quantity can be reduced.

In the above modified example, division into pulses of unequal width by the dividing means 11 is carried out on the basis of linear interpolation and the corrected value table but it is a matter of course that the other interpolating method of higher order is applicable to the division into plural pulses of unequal width.

The third modified example is shown in Fig.18. In Fig.18, it is selected properly according to the rate of change of ON time whether division of ON time of each transistor (Tra)-(Trc') should be carried out for pulses of equal width or pulses of unequal width.

In this modified example, when a switch choice is given between division into pulses of equal width (flow chart of Fig.6 and Fig.7) and division into pulses of unequal width (flow chart of Fig.10 and Fig.11) according to the rate of change of ON time, namely, the phase of signal wave, calculation of ON time of each transistor (Tra)-(Trc') and division of the ON time into the plural number N(N=4) are carried out equally with the whole phase angle 0≦φ≦2π, utilizing the objectivity of voltage vector, so as to reduce the calculation time still further.

As can be seen from the relative formulae (4) of PWM control pattern, if the angle φ0 is within the range of 0≦φ₀≦π/3 ON time _{T}a of transistor is within the range of Sin(φ0 +π/3) as shown in Fig.19 and the rate of change of the ON time is small. Therefore, division into pulses of equal width in a short calculation time is carried out so as to reproduce wave form precisely. As the ON time _{T}b of transistor is within the range of Sinφ₀ and its rate of change of ON time is large, division into pulses of unequal width is adopted so as to reproduce wave form precisly. In view of the above circumstances, ON time of transistor is divided into pulses of equal width or pulses of unequal width on the basis of the rate of change of the ON time within the whole range of 0≦φ₀≦2π of angle φ₀.

The above composition with the one-chip microcomputer 8 is explained below, with reference to Fig.18. In Fig.18, reference numeral 15 designates a sectional information calculation circuit which discriminates the section N in Table II from the phase wt. Reference numeral 16 designates an angel calculating circuit which inputs signals (signals of sectional information) N and the phase wt of signal wave outputted from the sectional information calculation circuit 15 and calculates the angle φ₀ by the following formula so as to nufy it within the range of 0≦φ₀≦π/3throughout the whole section N (N = 0-5) from the objectivity of voltage vector.

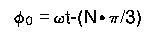

Reference numeral 17 designates a pulse dividing circuit which inputs the angel φ₀ and the effective value V₁ of voltage of fundamental wave, calculates ON time of each transistor (Tra)-(Trc') on the basis of the relative formulae (4) of PWM control pattern, similarly to the flow chart of Fig.6, and divides the ON time into plural pulses of equal width. Reference numeral 18 designates a pulse of unequal width calculation circuit which receives ON time of each transistor (Tra)-(Trc') calculated by the pulses dividing circuit 17, divided pulses of equal width and sectional signals N from the section information calculating circuit 15, grasps ON time (function of Sin~-Sinπ/3 in Tablell) of transistors (Tra)-(Trc') to be divided into pulses of unequal width on the basis of the Table II according to the section N, divides only ON time which should be divided into pulses of unequal width into plural pulses of unequal width by the linear interpolation based on the motion similar to the flow chart of Fig.10 and Fig.11 or by the interpolation table of the second modified example and outputs the divided pulses of unequal width and pulses of equal width equally divided by the pulse dividing circuit 17 to the base driver 18a.

Thus, there is provided the dividing means 11 which divides ON time ₇ of each transistor (Tra)-(Trc') calculated by the arithmetic operation means 10 into plural N(N = 4) pulses of equal width τ′ when the rate of change of the ON time is small (in Fig.19, angle φ₀ is within the range of Sinπ/3-Sin(φ₀ +π/3) and into plural N(N=4) pulses of unequal width {(τ′+Δτ), (τ′+2•Δτ)....} when the rate of change of the ON time is large (in Fig.19, angel φ₀ is within the manner of Sin0~Sinπ/3).

In this modified example, division of ON time by the dividing means 11 is carried out for pulses of unequal width when the rate of change of ON time is large as shown by Fig.19 and therefore as compared with the case where division is carried out for pulses of equal width (the case shown by Fig.15(a)), wave form can be reproduced precisely in relation to the mean value v of output voltage in the control period T'o corresponding to the equivalent carrier frequency as shown in Fig.19.

In this case where the rate of change of ON time is within a small range, because of small change the precision of wave form reproduction in relation to the mean value v of output voltage, even if division into equal width is carried out, is almost the same as in the case of division into pulses of unequal width as shown by Fig.15(b). Also, calculating time required for calculation of the interpolation value A ₇ is dispensed with by the time in which ON time is divided into pulses of equal width within a small range of the rate of change. Thus, processing time for calculation can be saved, while ensuring good precision of reproduction of wave form, and as a result, PWM control using the higher carrier frequency is made possible.

Moreover, calculation of PWM control pattern can be carried out equally throughout the whole range 0≦ωt≦2η of angle wt by utilizing the objectivity of voltage vector and thereafter, it can be easily grasped whether ON time should be divided into pulses of equal width or into pulses of unequal width on the basis of Table II. Thus, this process is suitable for a microcomputer and more simplification of process is made possible.

Fig.20 shows the fourth modified example. While in the above embodiment the number of division N of ON time is made the fixed plural number, (N = 4), in this modified example the number of divisions of ON time is set variable according to the ripple of current flowing through the three-phase winding 2. In Fig.20, the one-chip microcomputer 8 which forms the PWM control pattern contains the ON time arithmetic operation circuit 10 as an arithmetic operation means which calculates in the same way as the flow chart of Fig.6, the dividing circuit 11 as a dividing means which divides ON time if each transistor (Tra)-(Trc') calculated by the ON time arithmetic operation circuit 10 into plural pulses and a pulse-width controlling circuit 12 as a controlling means which ON controls each transistor (Tra)-(Trc') by driving the base driver 8a with pulses divided by the dividing circuit 11.

Reference numeral 13 designates a ripple detecting circuit which detects ripple of torque generated by the induction motor 1. Reference numeral 14 is incorporated in the microcomputer 8 and is a number of divisions setting circuit having a number of divisions table in which the value of number of divisions N of ON time of the dividing circuit 11 is stored according to the value of ripple of torque generated by the induction motor 1. The number of divisions N of the number of divisions setting circuit 14 is so set that it becomes larger by stages as the ripple of torque becomes larger and is stored. The value of number of divisions N according to the size of the ripple of torque detected by the ripple detecting circuit 13 is read out by number of divisions setting circuit 14 and the value of this number of divisions N is outputted to the dividing circuit 11 for the division of ON time.

Therefore, in this modified example the ripple of torque generated by the induction motor 1 becomes larger in electrical angle at every π/3 as shown by Fig.21. This ripple is detected by the torque ripple detecting circuit 13 and the number of divisions N corresponding to the size of this ripple is set by the number of divisions setting circuit 14. Therefore, in the state where torque ripple is large, number of divisions is set at a large value and ON time is divided in more numbers than usual in the state where torque ripple is large, with the result that carrier frequency is raised equivalently to the full. Consequently, ripple of torque of the induction motor 1 is restricted effectively and the induction motor 1 is driven to turn by uniformalized torque. As can be seen from Fig 21, ripple of torque is periodic according to the change of phase _{M}t and therefore as shown in Fig.22, provision of the number of divisions setting circuit 14' having a number of divisions table which stores beforehand the number of divisions N corresponding to phase wt can dispense with the torque ripple detecting circuit 13.

Fig.22 shows the fifth modified example. In the fourth modified example, the value of number of divisions N for dividing ON time of each transistor (Tra)-(Trc') is changed according to the ripple of torque of the induction motor 1 but in this modified example, in the case where the ripple of current flowing through the three-phase winding 2 and the ripple of voltage are restricted, number of divisions N is set variable according to phase wt of signal wave, namely, according to the rate of change of ON time of each transistor (Tra)-(Trc'). In Fig.22, the number of division table is stored beforehand in the number of divisions setting circuit 14'. As can be seen from the relative formulae (4) of PWM control pattern, in this table ON time _{T}a of transistor is within the range of Sin(φ₀ +π/3) as shown in Fig.23 when the angle φ₀ is within the range of 0≦φ₀≦π/3 for example, and since its rate of change of ON time is small, the value of number of divisions N is set at a normal value (N = 4, for example). On the other hand, if ON time _{T}b of transistor is within the range of Sinφ₀, since its rate of change of transistor is large, the value of number of divisions N is set at a large value (N=8, for example). The value of Number of divisions N is stored within the range of 0≦φ₀≦2πof angle φ₀, with reference to Table II.

In Fig.22, in the case where ON time of each transistor (Tra)-(Trc') calculated by the ON time arithmetic operation circuit 10' is divided into the plural number, number of divisions N corresponding to the phase wt (rate fo change of ON time) and amplitude V₁ of output voltage is read out from the number of divisions table and ON time is divided by this number of divisions N.

Therefore, in this modified example ON time of each transistor (Tra)-(Trc') calculated by the arithmetic operation means 10' is divided by the number of divisions N which is so set that the larger the rate of change of the ON time _{T}, the larger the value, as shown by Fig.23 and Fig.24 (Fig.23 is the case of division into pluses of unequal width and Fig.24 is the case of division into pulses of equal width) and therefore, ripple of current and ripple of voltage can be restricted effectively.

Fig.25 shows the sixth modified example. In this modified example, in the case where ON time of each transistor (Tra)-(Trc') is divided by the number of divisions N which is set variable according to the rate of change of ON time, proper choice is given between division into pulses of equal width and division into pulses of unequal width according to the rate of change.

In Fig.25, among the range of phase of signal wave shown by broken lines, in the range where the rate of change of ON time is large, the division of ON time is carried out for pulses of unequal width and in the range where phase of signal wave is small the division of ON time is carried out for pulses of equal width. Setting of the number of division N is the same as in the case of the fifth modified example.

Therefore, in this sixth modified example, in the range where the rate of change of ON time is large the reproduction precision of signal wave can be raised and in the range where the rage of change of ON time is small, while reproduction precision of signal wave can be kept good, calculation of interpolation value can be dispensed with and processing time can be saved, as compared with the case of division into pulses of unequal width.

In the case where division into many pulses is made by varying the number of division N for dividing ON time of each transistor (Tra)-(Trc'), if the width of divided pulses is less than equivalent to the short-circuit preventive time Td of arms which are composed at the upper and lower parts of transistor of the inverter 3, number of pulses should be reduced to prevent vanishment of pulses and to ensure reproduction precision of wave form to be recovered.

A flow chart for preventing the short-circuit is shown in Fig.26. In this figure, at the step S_{E1}, after start ON time of each transistor (Tra)-(Trc') is calculated and at the step S_{E2} the value of number of divisions N is read out and ON time of each transistor (Tra)-(Trc') is divided into the plural number N by this number of divisions N.

At the step S_{E3}, the width T of the divided pulse is compared with the arm short-circuit preventive time Td and in the case of T<-Td, output pulse is concluded to vanish and at the step SE4, the number of divisions N is reduced and returned to the step S_{E2}, where ON time of each transistor (Tra)-(Trc') is divided by the reduced number of divisions N.

If at the step S_{E3} T>Td is observed and pulse will not vanish, at the steps S_{E5} each transistor (Tra)--(Trc') in ON controlled at every period Tₒ' by this divided pulse, and "END".

## Claims

1. A pulse-width modulation control unit for an inverter (3) having a bridge circuit (4) connected to a three-phase winding (2), said bridge circuit having a plurality of switching elements (Tra,Tra', Trb,Trb', Trc,Trc'), whereby a D.C. voltage is pulse-width modulated by an ON/OFF operation of each switching element of said bridge circuit (4) and a three-phase A.C. voltage is applied to said three-phase winding (2), said control unit being characterised in that it comprises:
an arithmetic operation means (10) for calculating an ON time of each switching element at a calculation period corresponding to a carrier frequency;
a dividing means (11) for dividing the ON time of each switching element calculated by said arithmetic operation means into a plural number of pulses; and
a controlling means (12) for controlling the ON time of each switching element by said pulses obtained by dividing the ON time into a plural number of pulses.

2. A pulse-width modulation control unit according to claim 1, wherein the ON time of each switching element is equally divided into a fixed preset number of pulses.

3. A pulse-width modulation control unit according to claim 1, wherein the dividing means (11) divides the ON time of each switching element into plural pulses of unequal width.

4. A pulse-width modulation control unit according to claim 3, wherein the dividing means (11) divides the ON time of each switching element into plural pulses of unequal width by linear interpolation so that the width of each divided pulse changes in equal variations of width.

5. A pulse-width modulation control unit according to claim 3, wherein the dividing means (11) divides the ON time of each switching element into plural pulses of equal width and then divides said plural pulses of equal width into plural pulses of unequal width on the basis of a correction value table stored beforehand according to a phase of the three-phase A.C. voltage.

6. A pulse-width modulation control unit according to claim 1, wherein the dividing means (11) divides the ON time of each switching element into plural pulses of equal width when the rate of change of the ON time is within one predetermined range and divides the ON time into plural pulses of unequal width when the rate of change of the ON time is within another predetermined range.

7. A pulse-width modulation control unit according to claim 6, wherein the dividing means (11) divides the ON time of each switching element into pulses of unequal width when the rate of change of the ON time is large and into pulses of equal width when the rate of change of the ON time is small.

8. A pulse-width modulation control unit according to claim 6, wherein the dividing means (11), when dividing the ON time of each switching element into pulses of equal width, divides the ON time into a fixed preset plural number of pulses and, when dividing the ON time into pulses of unequal width, divides the ON time by linear interpolation so that the divided pulse width changes between adjacent pulses are equal in width.

9. A pulse-width modulation control unit according to claim 6, wherein the dividing means (11), when dividing the ON time of each switching element into pulses of unequal width, divides the ON time first into plural pulses of equal width and then divides said plural pulses of equal width into pulses of unequal width on the basis of a correction value table stored beforehand according to the phase of the three-phase A.C. voltage.

10. A pulse-width modulation control unit according to claim 1, wherein the arithmetic operation means (10) calculates the ON time of each switching element at a calculation period corresponding to a carrier frequency on the basis of one of the following two sets of calculation formulae within the range of 0-π/3 of a phase φ^{o} of the three-phase A.C. voltage: 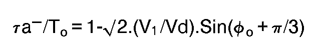 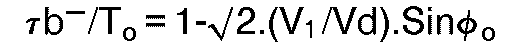 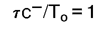 and 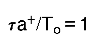 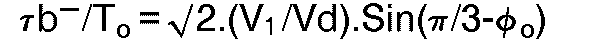 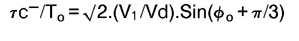 (τa― , _{T}a⁺, ₇b-, τc― are respective ON times of switching elements of a phase, b phase and c phase on (+) side and (-) side, T° = period, V₁ = effective voltage of a fundamental wave, Vd = the D.C. voltage to be supplied) and specifies the ON time of each switching element within the range of π/3-2π of the phase φ, based on the ON time calculated on the basis of the above calculation formulae and a permutation table of switching elements set according to the phase φₒ within the range of 0-2π.

11. A pulse-width modulation control unit according to claim 10, wherein the arithmetic operation means (10) has an ON time table in which is stored a desired ON time of each switching element within the range of 0--ff/3 of the phase q)., said ON time being calculated beforehand on the basis of said calculation formulae, and wherein said arithmetic operation means obtains the ON time from said ON time table.

12. A pulse-width modulation control unit according to claim 1, wherein the dividing means (11) divides the ON time of each switching element into plural pulses corresponding to a ripple based on current flowing through the three-phase winding.

13. A pulse-width modulation control unit according to claim 12, wherein the dividing means (11) divides the ON time of each switching element into plural pulses whose number corresponds to the rate of change of the ON time.

14. A pulse-width modulation control unit according to claim 13, wherein the dividing means (11) provides plural pulses which are divided pulses of equal width when the rate of change of the ON time of each switching element is within one predetermined range and which are divided pulses of unequal width when the rate of change is within another predetermined range.

## Patentansprüche

1. Pulsbreitenmodulierungssteuereinheit für einen Wechselrichter (3) mit einer Brückenschaltung (4), welche mit einer dreiphasigen Wicklung (2) verbunden ist, wobei die Brückenschaltung mehrere Schaltelemente (Tra,Tra', Trb,Trb', Trc,Trc') aufweist, wodurch eine Gleichspannung durch das EIN/AUS-Schalten jedes Schaltelements der Brückenschaltung (4) pulsbreitenmoduliert wird und eine dreiphasige Wechselspannung an die dreiphasige Wicklung (2) angelegt wird, wobei die Steuereinheit dadurch gekennzeichnet ist, daß sie aufweist:
eine arithmetische Berechnungseinrichtung (10) zum Berechnen der EIN-Zeit jedes Schaltelements (Tra) bis (Trc') mit einer Berechnungsperiode, die einer Trägerfrequenz entspricht;
eine Teilereinrichtung (11), zum Unterteilen der von der arithmetischen Verarbeitungseinrichtung berechneten EIN-Zeit jedes Schaltelements in eine Vielzahl von Pulsen; und
eine Steuereinrichtung (12), zum Steuern der EIN-Zeit jedes Schaltelements mittels der Pulse, die durch Unterteilung der EIN-Zeit in eine Vielzahl von Pulsen erhalten wurden.

2. Pulsbreitenmodulierungssteuereinheit nach Anspruch 1, wobei die EIN-Zeit jedes Schaltelements zu gleichen Teilen in eine feste vorgegebene Anzahl von Pulsen aufgeteilt wird.

3. Pulsbreitenmodulierungssteuereinheit nach Anspruch 1, wobei die Teilereinrichtung (11) die EIN-Zeit jedes Schaltelements in eine Vielzahl von Pulsen ungleicher Breite aufteilt.

4. Pulsbreitenmodulierungssteuereinheit nach Anspruch 3, wobei die Teilereinrichtung (11) die EIN-Zeit jedes Schaltelements in eine Vielzahl von Pulsen ungleicher Breite mittels linearer Interpolation aufteilt, so daß sich die Breite jedes geteilten Pulses in gleichen Breitenvariationen ändert.

5. Pulsbreitenmodulierungssteuereinheit nach Anspruch 3, wobei die Teilereinrichtung (11) die EIN-Zeit jedes Schaltelements in eine Vielzahl von Pulsen gleicher Breite teilt und dann die Vielzahl von Pulsen gleicher Breite auf der Basis einer im voraus entsprechend einer Phase der dreiphasigen Wechselspannung gespeicherten Korrekturwertetabelle in eine Vielzahl von Pulsen ungleicher Breite aufteilt.

6. Pulsbreitenmodulierungssteuereinheit nach Anspruch 1, wobei die Teilereinrichtung (11) die EIN-Zeit jedes Schaltelements in eine Vielzahl von Pulsen gleicher Breite teilt, wenn die Änderungsrate der EIN-Zeit innerhalb eines vorgegebenen Bereichs liegt, und die EIN-Zeit in eine Vielzahl von Pulsen ungleicher Breite aufteilt, wenn die Änderungsrate der EIN-Zeit innerhalb eines anderen vorgegebenen Bereichs liegt.

7. Pulsbreitenmodulierungssteuereinheit nach Anspruch 6, wobei die Teilereinrichtung (11) die EIN-Zeit jedes Schaltelements in eine Vielzahl von Pulsen ungleicher Breite teilt, wenn die Änderungsrate der EIN-Zeit groß ist, und sie in eine Vielzahl von Pulsen gleicher Breite aufteilt, wenn die Änderungsrate der EIN-Zeit klein ist.

8. Pulsbreitenmodulierungssteuereinheit nach Anspruch 6, wobei die Teilereinrichtung (11) beim Teilen der EIN-Zeit jedes Schaltelements in Pulse gleicher Breite, die EIN-Zeit in eine feste vorgegebene Vielzahl von Pulsen unterteilt und beim Teilen der EIN-Zeit in Pulse ungleicher Breite die EIN-Zeit mittels linearer Interpolation so unterteilt, daß die unterteilten Pulsbreitenänderungen zwischen benachbarten Pulsen in der Breite gleich sind.

9. Pulsbreitenmodulierungssteuereinheit nach Anspruch 6, wobei die Teilereinrichtung (11) beim Teilen der EIN-Zeit jedes Schaltelements in Pulse ungleicher Breite, die EIN-Zeit zuerst in eine Vielzahl von Pulsen gleicher Breite unterteilt und dann die Vielzahl von Pulsen gleicher Breite auf der Basis einer im voraus entsprechend der Phase der dreiphasigen Wechselspannung gespeicherten Korrekturwertetabelle in Pulse ungleicher Breite unterteilt.

10. Pulsbreitenmodulierungssteuereinheit nach Anspruch 1, wobei die arithmetische Berechnungseinrichtung (10) die EIN-Zeit jedes Schaltelements mit einer der Trägerfrequenz entsprechenden Berechnungsperiode auf der Basis der nachstehenden zwei Sätze von Berechnungsgleichungen innerhalb eines Bereichs von 0 bis _{1T}/3 einer Phase 4)₀ der dreiphasigen Wechselspannung berechnet: 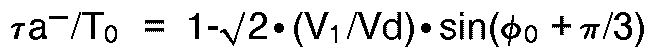 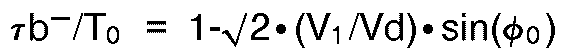 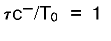 und 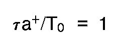 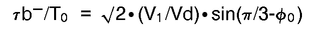 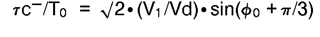 (τa― , _{T}a⁺, ₇b-, τc― sind die entsprechenden EIN-Zeiten der Schaltelemente einer a-Phase, b-Phase und c-Phase auf der (+) Seite und (-) Seite, To = die Periode, V₁ = die effektive Spannung einer Grundwelle, V_{d} = die zu liefernde Gleichspannung) und die EIN-Zeit für jedes Schaltelement innerhalb des Bereichs π/3 bis 2_{1T} der Phase φ auf der Basis der EIN-Zeit, die auf der Basis der vorstehenden Formeln und einer Vertauschungstabelle von Schaltelementen, die entsprechend der Phase φ₀ innerhalb des Bereichs von 0 bis 2_{1T} festgelegt ist, berechnet wurde.

11. Pulsbreitenmodulierungssteuereinheit nach Anspruch 10, wobei die arithmetische Berechnungseinrichtung (10) eine EIN-Zeit-Tabelle aufweist, in welcher eine erwünschte EIN-Zeit jedes Schaltelements innerhalb des Bereiches 0 bis π/3 der Phase φ gespeichert ist, wobei die EIN-Zeit im voraus auf der Basis der Berechnungsformeln berechnet wurde, und wobei die arithmetische Verarbeitungseinrichtung die EIN-Zeit von der EIN-Zeit-Tabelle erhält.

12. Pulsbreitenmodulierungssteuereinheit nach Anspruch 1, wobei die Teilereinrichtung (11) die EIN-Zeit jedes Schaltelements in eine Vielzahl von Pulsen entsprechend einer Welligkeit auf der Basis eines durch die dreiphasige Wicklung fließenden Stroms aufteilt.

13. Pulsbreitenmodulierungssteuereinheit nach Anspruch 12, wobei die Teilereinrichtung (11) die EIN-Zeit jedes Schaltelements in eine Vielzahl von Pulsen aufteilt, deren Anzahl der Änderungsrate der EIN-Zeit entspricht.

14. Pulsbreitenmodulierungssteuereinheit nach Anspruch 13, wobei die Teilereinrichtung (11) eine Vielzahl von Pulsen bereitstellt, welch unterteilte Pulse gleicher Breite sind, wenn die Änderungsrate der EIN-Zeit jedes Schaltelements innerhalb eines vorgegebenen Bereichs liegt und welche unterteilte Pulse ungleicher Breite sind, wenn die Änderungsrate innerhalb eines anderen vorgegebenen Bereichs liegt.

## Revendications

1. Unité de commande de modulation de largeur d'impulsion pour un onduleur (3) comportant un montage en pont (4) connecté à un enroulement triphasé (2), ledit montage en pont comportant plusieurs éléments de commutation (Tra, Tra', Trb, Trb', Trc, Trc'), ce par quoi une tension continue est modulée en largeur d'impulsion par l'état PASSANT/BLOQUE de chaque élément de commutation dudit montage en pont (4), et une tension alternative triphasée est appliquée audit enroulement triphasé (2), ladite unité de commande étant caractérisée en ce qu'elle comporte:
un moyen opératoire arithmétique (10) pour calculer la durée de l'état PASSANT de chaque élément de commutation pendant une durée de calcul correspondant à une fréquence porteuse;
un moyen diviseur (11) pour diviser la durée de l'état PASSANT de chaque élément de commutation calculée par ledit moyen opératoire arithmétique en un nombre multiple d'impulsions; et
un moyen de commande (12) pour commander la durée de l'état PASSANT de chaque élément de commutation au moyen desdites impulsions obtenues, en divisant la durée de l'état PASSANT en un nombre multiple d'impulsions.

2. Unité de commande de modulation de largeur d'impulsion selon la revendication 1, dans laquelle la durée de l'état PASSANT de chaque élément de commutation est divisée également en un nombre fixé réglé d'impulsions.

3. Unité de commande de modulation de largeur d'impulsion selon la revendication 1, dans laquelle le moyen diviseur (11) divise la durée de l'état PASSANT de chaque élément de commutation en plusieurs impulsions de largeurs inégales.

Unité de commande de modulation de largeur d'impulsion selon la revendication 3, dans laquelle le moyen diviseur (11) divise la durée de l'état PASSANT de chaque élément de commutation en plusieurs impulsions de largeurs inégales par interpolation linéaire de façon que la largeur de chaque impulsion divisée varie en variations égales de largeur.

Unité de commande de modulation de largeur d'impulsion selon la revendication 3, dans laquelle le moyen diviseur (11) divise la durée de l'état PASSANT de chaque élément de commutation en plusieurs impulsions de largeurs égales et divise ensuite lesdites plusieurs impulsions de largeurs égales en plusieurs impulsions de largeurs inégales sur la base d'un tableau de valeurs de correction stocké au préalable selon une phase de la tension alternative triphasée.

Unité de commande de modulation de largeur d'impulsion selon la revendication 1, dans laquelle le moyen diviseur (11) divise la durée de l'état PASSANT de chaque élément de commutation en plusieurs impulsions de largeurs égales lorsque la vitesse de variation de la durée de l'état PASSANT se trouve à l'intérieur d'une plage prédéterminée et divise la durée de l'état PASSANT en plusieurs impulsions de largeurs égales lorsque la vitesse de variation de la durée de l'état PASSANT se trouve à l'intérieur d'une autre plage prédéterminée.

Unité de commande de modulation de largeur d'impulsion selon la revendication 6, dans laquelle le moyen diviseur (11) divise la durée de l'état PASSANT de chaque élément de commutation en plusieurs impulsions de largeurs inégales lorsque la vitesse de variation de la durée de l'état PASSANT est élevée, et en impulsions de largeurs égales lorsque la vitesse de variation de la durée de l'état PASSANT est faible.

Unité de commande de modulation de largeur d'impulsion selon la revendication 6, dans laquelle le moyen diviseur (11), lorsqu'il divise la durée de l'état PASSANT de chaque élément de commutation en plusieurs impulsions de largeurs égales, divise la durée de l'état PASSANT en un nombre multiple prédéterminé fixé d'impulsions et, lorsqu'il divise la durée de l'état PASSANT en plusieurs impulsions de largeurs inégales, divise la durée de l'état PASSANT par interpolation linéaire, de façon que les modifications de la largeur de l'impulsion divisée entre des impulsions adjacentes soient égales en largeur.

Unité de commande de modulation de largeur d'impulsion selon la revendication 6, dans laquelle le moyen diviseur (11), lorsqu'il divise la durée de l'état PASSANT de chaque élément de commutation en impulsions de largeurs inégales, divise la durée de l'état PASSANT d'abord en plusieurs impulsions de largeurs égales, puis divise lesdites plusieurs impulsions de largeurs égales en impulsions de largeurs inégales sur la base d'un tableau de valeurs de correction stocké au préalable selon la phase de la tension alternative triphasée.

Unité de commande de modulation de largeur d'impulsion selon la revendication 1, dans laquelle le moyen opératoire arithmétique (10) calcule la durée de l'état PASSANT de chaque élément de commutation selon une période de calcul correspondant à une fréquence porteuse sur la base de l'un des deux ensembles suivants de formules de calcul à l'intérieur de la plage de 0--ff/3 d'une phase φ⁰ de la tension alternative triphasée: 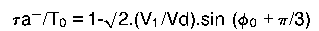 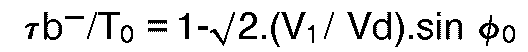 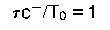 et 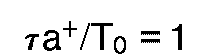 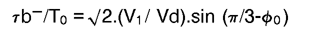 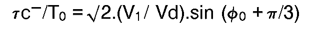 (τa― , _{T}a⁺, _{T}b-, τc― sont les durées PASSANTES respectives des éléments de commutation de la phase a, de la phase b, et de la phase c, sur le côté (+) et sur le côté (-), T° = période, V₁ = tension efficace d'une onde fondamentale, Vd=tension continue à fournir) et spécifie la durée de l'état PASSANT de chaque élément de commutation à l'intérieur de la plage de π/3-2π de la phase φ, sur la base de la durée de l'état PASSANT calculée sur la base des formules de calcul ci-dessus et d'un tableau de permutation des éléments de commutation fixés selon la phase φ₀ à l'intérieur de la plage de 0-2 _{1T}.

11. Unité de commande de modulation de largeur d'impulsion selon la revendication 10, dans laquelle le moyen opératoire arithmétique 10 comporte un tableau de durées PASSANTES dans lequel est stockée une durée de l'état PASSANT désirée de chaque élément de commutation à l'intérieur de la plage de 0-π/3 de la phase φ, ladite durée de l'état PASSANT étant calculée au préalable sur la base desdites formules de calcul, et dans lequel ledit moyen opératoire arithmétique obtient la durée de l'état PASSANT à partir dudit tableau de durées de l'état PASSANT.

12. Unité de commande de modulation de largeur d'impulsion selon la revendication 1, dans laquelle le moyen diviseur (11) divise la durée de l'état PASSANT de chaque élément de commutation en plusieurs impulsions correspondant à une ondulation basée sur le courant qui s'écoule à travers l'enroulement triphasé.

13. Unité de commande de modulation de largeur d'impulsion selon la revendication 12, dans laquelle le moyen diviseur (11) divise la durée de l'état PASSANT de chaque élément de commutation en plusieurs impulsions dont le nombre correspond à la vitesse de variation de la durée de l'état PASSANT.

14. Unité de commande de modulation de largeur d'impulsion selon la revendication 13, dans laquelle le moyen diviseur (11) fournit plusieurs impulsions qui sont des impulsions divisées de largeurs égales lorsque la vitesse de variation de la durée de l'état PASSANT de chaque élément de commutation se trouve à l'intérieur d'une plage prédéterminée et qui sont des impulsions divisées de largeurs inégales lorsque la vitesse de variation se trouve à l'intérieur d'une autre plage prédéterminée.
